# EUROPEAN PATENT APPLICATION

(11) **EP 4 447 011 A1**
(43) Date of publication of application: **16.10.2024**
(21) Application number: 24168422.4
(22) Date of filing: 04.04.2024
(51) Int. Cl.: G07C 9/00, B60R 25/24

(54) **CONTROL DEVICE, CONTROL SYSTEM, CONTROL METHOD, AND PROGRAM**

(30) Priority: 14.04.2023 JP 2023066317
(71) Applicant: Kabushiki Kaisha Tokai Rika Denki Seisakusho, Aichi 480-0195 (JP); Suzuki Motor Corporation, Shizuoka 432-8611 (JP)
(72) Inventor: HASEGAWA, Yosuke, Oguchi-cho, 480-0195 (JP); TAKAHASHI, Shogo, Oguchi-cho, 480-0195 (JP); NAKAO, Taichi, Hamamatsu-shi, 432-8611 (JP)
(74) Representative: TBK

(57) **Abstract**

There is provided a control unit configured to control locking of a door included in a mobile body on a basis of a first locking request transmitted from any of a first terminal or a second terminal and a position of a terminal that transmits the first locking request, the first terminal and the second terminal being each carriable by a user, wherein the control unit performs control to permit the locking of the door based on the first locking request when the first terminal is determined to be positioned inside the mobile body and the first locking request is transmitted from the second terminal determined to be positioned outside the mobile body.

## Description

### CROSS REFERENCE TO RELATED APPLICATION(S)

This application is based upon and claims benefit of priority from Japanese Patent Application No. 2023-066317, filed on April 14, 2023, the entire contents of which are incorporated herein by reference.

### BACKGROUND

The present invention relates to a control device, a control system, a control method, and a program.

In recent years, technology has been developed that controls the locking of a door included in a mobile body on the basis of a signal transmitted from a terminal. For example, JP 2023-009917A discloses technology that locks a door of a wheeled vehicle on the basis of a signal transmitted from an electronic key serving as the terminal. When the locking is controlled on the basis of such a signal, such circumstances are sometimes prevented that the terminal is locked inside the mobile body and it is not possible to unlock the door. Specifically, when the terminal is positioned inside the mobile body, the locking of the door based on a signal transmitted from the terminal is sometimes restricted.

### SUMMARY

Meanwhile, it is also possible that the locking of a door of a mobile body is controlled by a plurality of terminals. However, when the locking is restricted as described above, one of the terminals is positioned inside the mobile body to prevent another terminal from locking the door of the mobile body from the outside. This causes an inconvenient situation for a user.

The present invention has been thus devised in view of the problem described above. An object of the present invention is to provide a novel and improved control device, control system, control method, and program that each make it possible to increase convenience for a user in locking a door with a terminal.

To solve the above described problem, according to an aspect of the present invention, there is provided a control device comprising a control unit configured to control locking of a door included in a mobile body on a basis of a first locking request transmitted from any of a first terminal or a second terminal and a position of a terminal that transmits the first locking request, the first terminal and the second terminal being each carriable by a user, wherein the control unit performs control to permit the locking of the door based on the first locking request when the first terminal is determined to be positioned inside the mobile body and the first locking request is transmitted from the second terminal determined to be positioned outside the mobile body.

To solve the above described problem, according to another aspect of the present invention, there is provided a control system comprising: a control device that is included in a mobile body; and a first terminal that is a fob key carriable by a user, wherein the control device includes a control unit that controls locking of a door included in the mobile body on a basis of a first locking request transmitted from any of the first terminal or a second terminal and a position of a terminal that transmits the first locking request, the second terminal being carriable by a user, and the control unit performs control to permit the locking of the door based on the first locking request when the first terminal is determined to be positioned inside the mobile body and the first locking request is transmitted from the second terminal determined to be positioned outside the mobile body.

To solve the above described problem, according to another aspect of the present invention, there is provided a control method that is executed by a computer, the control method comprising controlling locking of a door included in a mobile body on a basis of a first locking request transmitted from any of a first terminal or a second terminal and a position of a terminal that transmits the first locking request, the first terminal and the second terminal being each carriable by a user, wherein the controlling includes performing control to permit the locking of the door based on the first locking request when the first terminal is determined to be positioned inside the mobile body and the first locking request is transmitted from the second terminal determined to be positioned outside the mobile body.

To solve the above described problem, according to another aspect of the present invention, there is provided a program for causing a computer to function as a control unit configured to control locking of a door included in a mobile body on a basis of a first locking request transmitted from any of a first terminal or a second terminal and a position of a terminal that transmits the first locking request, the first terminal and the second terminal being each carriable by a user, wherein the control unit performs control to permit the locking of the door based on the first locking request when the first terminal is determined to be positioned inside the mobile body and the first locking request is transmitted from the second terminal determined to be positioned outside the mobile body.

As described above, according to the present invention, it is possible to increase convenience for a user in locking a door with a terminal.

### BRIEF DESCRIPTION OF THE DRAWINGS

FIG. 1 is a block diagram illustrating a configuration example of a control system according to the present embodiment.
FIG. 2 is a diagram for describing control exerted by a control unit 355 over an operation of a mobile body 30 on the basis of a result of a determination of a position of each of terminals.
FIG. 3 is a flowchart illustrating an example of a flow of the control exerted by the control device 350 according to the present embodiment over the operation of the mobile body 30.
FIG. 4 is a sequence diagram illustrating an example of a flow of control exerted by a second authentication device 340 and the control device 350 according to the present embodiment over locking of a door 315 of the mobile body 30.

### DETAILED DESCRIPTION OF THE EMBODIMENT(S)

Hereinafter, referring to the appended drawings, preferred embodiments of the present invention will be described in detail. It should be noted that, in this specification and the appended drawings, structural elements that have substantially the same function and structure are denoted with the same reference numerals, and repeated explanation thereof is omitted.

### <1. Embodiment>

### «1.1. System Configuration Example»

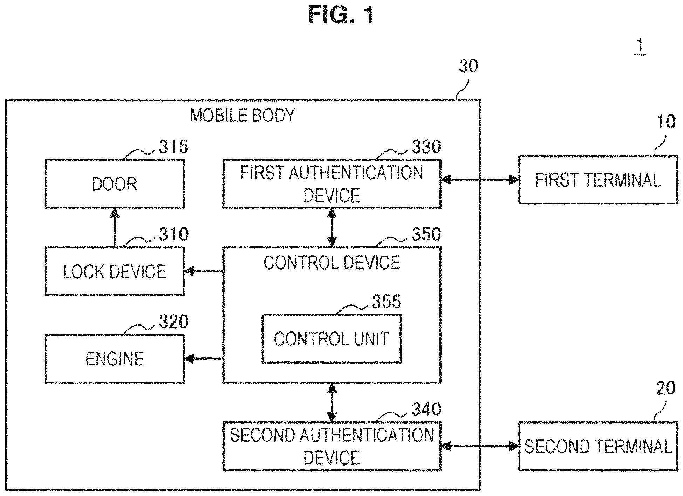

First, a configuration example of a control system according an embodiment of the present invention will be described. FIG. 1 is a block diagram illustrating the configuration example of the control system according to the present embodiment.

As illustrated in FIG. 1, a control system 1 according to the present embodiment includes a first terminal 10, a second terminal 20, and a mobile body 30.

### (First Terminal 10 and Second Terminal 20)

The first terminal 10 and the second terminal 20 are terminals carriable by a user (e.g., an owner of the mobile body 30, a person permitted by the owner to use the mobile body 30, or the like) of the mobile body 30. When the first terminal 10 and the second terminal 20 are not distinguished, the first terminal 10 and the second terminal 20 are herein sometimes referred to simply as a "terminal".

The first terminal 10 and the second terminal 20 wirelessly communicate with the mobile body 30 to transmit various kinds of information. Communication standards used for the communication between the first terminal 10 and the second terminal 20, and the mobile body 30 may be, for example, Bluetooth (registered trademark) Low Energy (BLE), Near Field Communication (NFC), or the like.

The first terminal 10 and the second terminal 20 may each transmit, for example, a request to execute an operation by the mobile body 30. The request to execute an operation by the mobile body 30 may be, for example, a request to lock or a request to unlock a door 315 described below, or a request to start or a request to stop an engine 320 described below. The locking request transmitted from a terminal will also be referred to as a first locking request.

The first terminal 10 may be an electronic key that emits a signal for controlling the mobile body 30. More specifically, the first terminal 10 may be a genuine fob key that accompanies the mobile body 30 when the mobile body 30 is sold. The following description chiefly describes a case where the first terminal 10 is a fob key. It should be noted that the first terminal 10 serving as a fob key will be referred to as a fob key 11.

The second terminal 20 may be a mobile terminal such as a smartphone in which key information downloaded from a predetermined server is set. The second terminal 20 may be a general-purpose mobile terminal and may be manufactured by a source different from that of the mobile body 30.

An application downloaded from the predetermined server may be installed in the second terminal 20. The application is a program for driving a function of the mobile body 30. When the application receives an operation inputted from a user, the application performs control for transmitting a request corresponding to the operation inputted from the user to the mobile body 30.

The following description chiefly describes a case where the second terminal 20 is a mobile terminal. It should be noted that the second terminal 20 serving as a mobile terminal will be referred to as a mobile terminal 21.

### (Mobile Body 30)

The mobile body 30 according to the present embodiment may be, for example, a vehicle such as a wheeled vehicle, an aircraft, or a vessel. The following description chiefly assumes a case where the mobile body 30 is a wheeled vehicle.

As illustrated in FIG. 1, the mobile body 30 includes a lock device 310, the door 315, the engine 320, a first authentication device 330, a second authentication device 340, and a control device 350.

### (Lock Device 310)

The lock device 310 is an electronic lock device that locks and unlocks the door 315 included in the mobile body 30.

### (Door 315)

The door 315 is a door that allows a user to get in and out of the mobile body 30.

### (Engine 320)

The engine 320 is a power engine that generates the power of the mobile body 30.

### (First Authentication Device 330 and Second Authentication Device 340)

The first authentication device 330 wirelessly communicates with the fob key 11. In addition, the second authentication device 340 wirelessly communicates with the mobile terminal 21.

The first authentication device 330 and the second authentication device 340 may be control devices (Electronic Control Units: ECUs) each including, for example, a processor, a memory, and the like.

The first authentication device 330 and the second authentication device 340 authenticate the respective terminals that communicate with the first authentication device 330 and the second authentication device 340 on the basis of pieces of key information received from the terminals.

The first authentication device 330 and the second authentication device 340 each receive, from the terminal, a request to execute an operation by the mobile body 30 such as a first locking request including key information.

The first authentication device 330 and the second authentication device 340 each control the transmission of a request to the control device 350 on the basis of a result of the authentication of the terminal. For example, when both or any one of the authenticity of the key information and the authenticity of the terminal is proved through the authentication, a request may be transmitted to the control device 350 in accordance with the request from the terminal.

More specifically, when the first authentication device 330 and the second authentication device 340 each receive a first locking request from the terminal and the authenticity of the terminal is proved, a locking request may be transmitted to the control device 350. The locking requests transmitted from the first authentication device 330 and the second authentication device 340 will also be each referred to as a second locking request.

### (Control Device 350)

The control device 350 may be an ECU including, for example, a processor, a memory, and the like. As illustrated in FIG. 1, the control device 350 according to the present embodiment includes a control unit 355.

The control unit 355 controls operations of the mobile body 30 such as locking and unlocking the door 315 by the lock device 310, and starting and stopping the engine 320.

The control unit 355 may control an operation of the mobile body 30 on the basis of a request received from the first authentication device 330 or the second authentication device 340.

In addition, the control unit 355 may determine the position of each of the terminals. More specifically, the control unit 355 may determine whether each of the terminals is positioned inside or outside the mobile body 30.

The control unit 355 may determine whether the respective terminals are positioned inside or outside the mobile body 30 on the basis of reception conditions of signals received by the first authentication device 330 and the second authentication device 340 from the terminals. The method for determining whether the respective terminals are positioned inside or outside the mobile body 30 is not, however, limited in particular as long as the method is a technique typically used in the field in which the wheeled vehicle is controlled on the basis of wireless communication. For example, it may be determined whether the respective terminals are positioned inside or outside the mobile body 30 on the basis of the RSSIs of signals transmitted from the terminals.

The control unit 355 may control an operation of the mobile body 30 on the basis of a result of the determination of the position of each of the terminals.

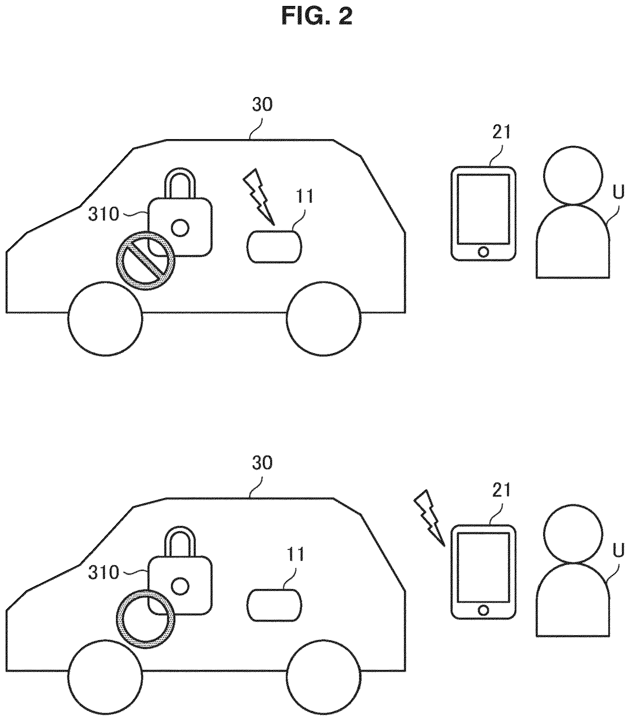

Here, control exerted by the control unit 355 over an operation of the mobile body 30 on the basis of a result of a determination of the position of each of the terminals will be described with reference to FIG. 2. FIG. 2 is a diagram for describing the control exerted by the control unit 355 over the operation of the mobile body 30 on the basis of the result of the determination of the position of each of terminals. Here, operation controls executed when the fob key 11 is positioned inside the mobile body 30 (inside the vehicle) and the mobile terminal 21 is positioned outside the mobile body 30 (outside the vehicle) as illustrated in the upper and lower parts of FIG. 2 will be described.

In the case of the upper part of FIG. 2, the control unit 355 determines that the fob key 11 is positioned inside the vehicle. Here, when a first locking request is transmitted from the fob key 11, the control unit 355 performs control not to permit the locking of the door 315 by the lock device 310 based on the first locking request. This prevents the fob key 11 that transmits the first locking request from being locked inside the vehicle.

In the case of the lower part of FIG. 2, the control unit 355 determines that the fob key 11 is positioned inside the vehicle and the mobile terminal 21 is positioned outside the vehicle. Here, when a first locking request is transmitted from the mobile terminal 21, the control unit 355 performs control to permit the locking of the door 315 by the lock device 310 based on the first locking request.

As a comparative example, it is also possible that, when it is determined that the fob key 11 is positioned inside the vehicle, control is performed to uniformly prohibit the locking of the door 315 by the lock device 310 based on a first locking request. According to the comparative example, the fob key 11 is constantly prevented from being locked inside the vehicle.

The possible needs of a user U, however, include taking out only the mobile terminal 21 from the vehicle when the fob key 11 and the mobile terminal 21 are present inside the vehicle. Examples of the possible needs include taking out only the mobile terminal 21 from the vehicle and purchasing something with a payment function of the mobile terminal 21.

According to the comparative example, when the fob key 11 is positioned inside the vehicle, control is performed not to permit the locking of the door 315 based on a first locking request transmitted from the mobile terminal 21. Therefore, although the user U is able to make a request to lock and unlock the door 315 by operating the mobile terminal 21, the user U has to be constantly carrying the fob key 11.

Meanwhile, even when the control unit 355 according to the present embodiment determines that the fob key 11 is positioned inside the vehicle, the control unit 355 performs control to permit the locking the door 315 by the lock device 310 when a first locking request is transmitted from the mobile terminal 21 and the control unit 355 determines that the mobile terminal 21 is positioned outside the vehicle.

According to this configuration, the user U is able to take out only the mobile terminal 21 with the fob key 11 left inside the vehicle, which increases the convenience for the user U. It should be noted that, when the door 315 is locked through the processing described above, the user U is supposed to be carrying the mobile terminal 21 with which a first locking request is made. The user U is thus able to issue an instruction to unlock the locked door 315 by operating the mobile terminal 21 even when the fob key 11 is locked inside the vehicle.

The control exerted by the control unit 355 over the locking of the door 315 of the mobile body 30 on the basis of a result of a determination of the position of each of the terminals has been described above so far with reference to FIG. 2. When it is determined that the fob key 11 is positioned inside the mobile body 30 and the door 315 is permitted to be locked on the basis of a first locking request transmitted from the mobile terminal 21 determined to be positioned outside the mobile body 30, the control unit 355 may further execute other control.

For example, in the case as described above, the control unit 355 may control the state of the mobile body 30 to transition to a state in which a start of the engine 320 based on an engine start request transmitted from the fob key 11 is not permitted.

When the control described above is not performed, a third person other than the user U may break a window of the mobile body 30 to intrude into the mobile body 30 and start the engine 320 to steal the mobile body 30. The control unit 355 according to the present embodiment, however, makes it possible to prevent the engine 320 from being started when the fob key 11 is locked inside the vehicle inside which the user U is not present, which increases the security.

The state in which a start of the engine 320 is not permitted may be canceled, for example, when the door 315 is unlocked from the outside of the mobile body 30 or when the control unit 355 determines that the mobile terminal 21 is positioned inside the mobile body 30.

### «1.2. Flow of Control»

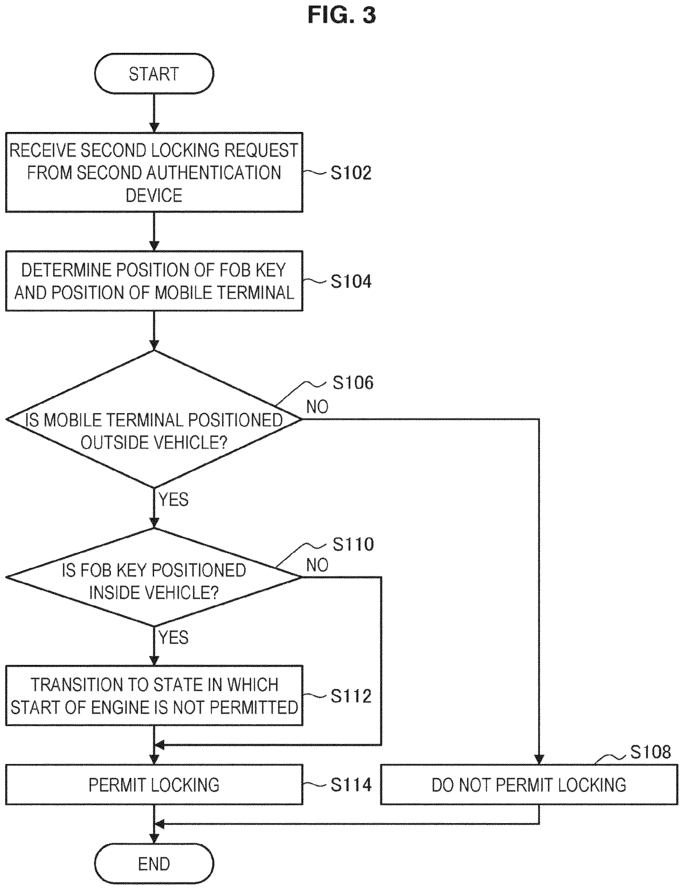

Subsequently, a flow of control exerted by the control device 350 according to the present embodiment over an operation of the mobile body 30 on the basis of a first locking request and results of determinations of the positions of the mobile terminal 21 and the fob key 11 will be described with an example with reference to FIG. 3.

FIG. 3 is a flowchart illustrating an example of the flow of the control exerted by the control device 350 according to the present embodiment over the operation of the mobile body 30.

First, the control unit 355 receives a second locking request from the second authentication device 340 (S102). It should be noted that the second locking request is transmitted on the basis of a first locking request received by the second authentication device 340 from the mobile terminal 21.

When the control unit 355 acquires the second locking request from the second authentication device 340, the control unit 355 determines the positions of the fob key 11 and the mobile terminal 21 (S104).

When the control unit 355 determines that the mobile terminal 21 is positioned inside the vehicle (S106/NO), the control unit 355 may perform control not to permit the locking of the door 315 (S108).

When the control unit 355 determines that the mobile terminal 21 is positioned outside the vehicle (S106/YES), the control unit 355 advances the processing to S110.

When the control unit 355 determines that the fob key 11 is positioned outside the vehicle (S110/NO), the control unit 355 then advances the processing to S114.

In addition, when the control unit 355 determines that the fob key 11 is positioned inside the vehicle (S110/YES), the control unit 355 advances the processing to S112.

The control unit 355 transitions to the state in which a start of the engine 320 based on an engine start request transmitted from the fob key 11 is not permitted (S112).

The control unit 355 then performs control to permit the locking of the door 315 (S114).

### «1.3. Example of Locking Control by Second Authentication Device 340»

The example in which the control device 350 controls the locking of the door 315 has been described above as an example of the embodiment of the present invention. The control device 350 does not, however, have to control the locking of the door 315. In this case, the position of each of the terminals does not have to be determined by the control device 350.

Here, a case where the second authentication device 340 determines the position of the mobile terminal 21 and controls the locking of the door 315 will be described as another example of the embodiment of the present invention.

The second authentication device 340 according to the other example of the embodiment of the present invention has a function of the control unit that controls the locking of the door 315 on the basis of a first locking request transmitted from the mobile terminal 21 and the position of the mobile terminal 21.

When the first locking request is transmitted from the mobile terminal 21 positioned outside the vehicle, the second authentication device 340 performs control to permit the locking of the door 315 by transmitting a forced-locking request as a second locking request.

The control unit 355 of the control device 350 according to the other example of the embodiment of the present invention that acquires the forced-locking request performs control to permit the locking of the door 315 even when the control unit 355 determines that the fob key 11 is positioned inside the vehicle.

Meanwhile, when the control unit 355 of the control device 350 acquires a second locking request that is not a forced-locking request and determines that the fob key 11 is positioned inside the vehicle, the control unit 355 may perform control not to permit the locking of the door 315. It should be noted that the second locking request which is not a forced-locking request will also be referred to as a third locking request. The control device 350 that acquires a forced-locking request is an example of a lock control device that controls the lock device 310.

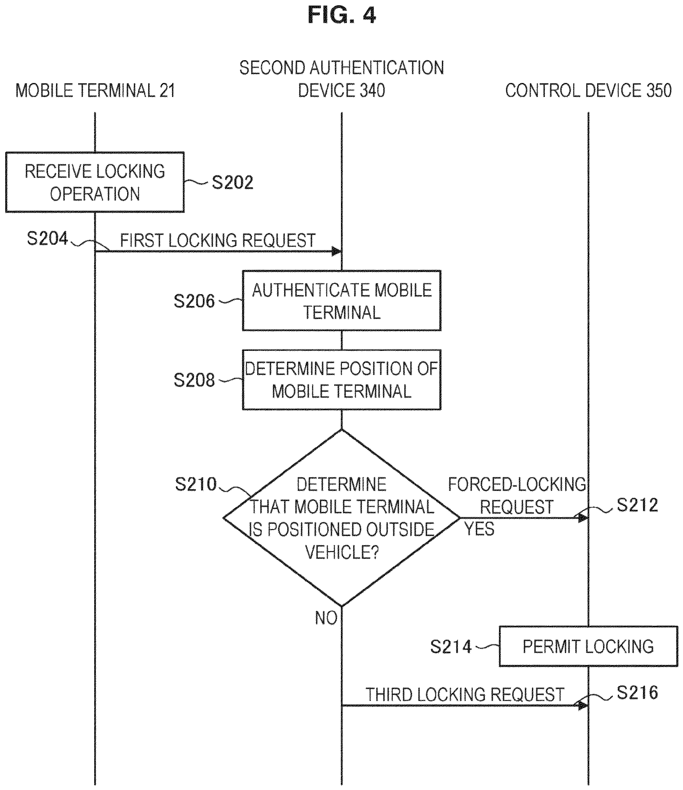

Subsequently, a flow of the control exerted by the second authentication device 340 and the control device 350 over the locking of the door 315 of the mobile body 30 will be described with an example with reference to FIG. 4.

FIG. 4 is a sequence diagram illustrating an example of the flow of the control exerted by the second authentication device 340 and the control device 350 according to the present embodiment over the locking of the door 315 of the mobile body 30.

First, the mobile terminal 21 receives a locking operation on the door 315 by a user (S202). The mobile terminal 21 transmits a first locking request to the second authentication device 340 on the basis of the locking operation (S204).

The second authentication device 340 authenticates the mobile terminal 21 on the basis of key information included in the received first locking request (S206).

When the authenticity of the mobile terminal 21 is proved through the authentication, the second authentication device 340 determines the position of the mobile terminal 21 (S208).

When the second authentication device 340 determines that the mobile terminal 21 is positioned outside the vehicle (S210/YES), the second authentication device 340 transmits a forced-locking request to the control device 350 (S212).

Subsequently, the control unit 355 of the control device 350 performs control to permit the locking of the door 315 (S214).

Meanwhile, when the second authentication device 340 determines that the mobile terminal 21 is positioned inside the vehicle (S210/NO), the second authentication device 340 may transmit a third locking request to the control device 350 (S216).

### <2. Supplemental Information>

Heretofore, preferred embodiments of the present invention have been described in detail with reference to the appended drawings, but the present invention is not limited thereto. It should be understood by those skilled in the art that various changes and alterations may be made without departing from the spirit and scope of the appended claims.

For example, the example in which the first authentication device 330, the second authentication device 340, and the control device 350 are configured as different devices has been described in the embodiment described above, but some or all of these devices may be configured as one device.

For example, the first authentication device 330, the second authentication device 340, and the control device 350 may be configured as one device. In this case, the control device 350 may have a function of the first authentication device 330 and a function of the second authentication device 340. In this case, the control device 350 is connected to the fob key 11 and the mobile terminal 21. That is, the processing in S102 in the flowchart illustrated in FIG. 3 is performed by the control device 350.

In addition, when the first authentication device 330 and the second authentication device 340 are configured as one device, the first authentication device 330 may execute a function executed by the second authentication device 340.

In addition, the series of processing by the respective devices described herein may be achieved by programs stored in a non-transitory computer readable storage medium. Each of the programs is read by an RAM and executed by a processor such as a CPU, for example, when executed by a computer. The storage medium described above is, for example, a magnetic disk, an optical disc, a magneto-optical disk, a flash memory, or the like. In addition, the programs described above may be distributed, for example, through a network without using the storage medium.
There is provided a control unit configured to control locking of a door included in a mobile body on a basis of a first locking request transmitted from any of a first terminal or a second terminal and a position of a terminal that transmits the first locking request, the first terminal and the second terminal being each carriable by a user, wherein the control unit performs control to permit the locking of the door based on the first locking request when the first terminal is determined to be positioned inside the mobile body and the first locking request is transmitted from the second terminal determined to be positioned outside the mobile body.

## Claims

1. A control device comprising
a control unit configured to control locking of a door included in a mobile body on a basis of a first locking request transmitted from any of a first terminal or a second terminal and a position of a terminal that transmits the first locking request, the first terminal and the second terminal being each carriable by a user, wherein
the control unit performs control to permit the locking of the door based on the first locking request when the first terminal is determined to be positioned inside the mobile body and the first locking request is transmitted from the second terminal determined to be positioned outside the mobile body.

2. The control device according to claim 1, wherein, when the first terminal is determined to be positioned inside the mobile body and the first locking request is transmitted from the first terminal, the control unit performs control not to permit the locking of the door based on the first locking request.

3. The control device according to 1, wherein the control device controls the locking of the door by controlling transmission of a second locking request to a lock control device, the lock control device controlling a lock device that locks the door.

4. The control device according to any one of claims 1 to 3, wherein the control unit determines whether the first terminal and the second terminal are positioned inside or outside the mobile body.

5. The control device according to any one of claims 1 to 3, wherein the control unit authenticates the terminal that transmits the first locking request and controls the locking of the door further on a basis of a result of authentication.

6. The control device according to any one of claims 1 to 3, wherein
the control unit controls a start of an engine of the mobile body on a basis of an engine start request transmitted from the first terminal, and
the control unit transitions to a state in which the start of the engine based on the engine start request is not permitted when the first terminal is determined to be positioned inside the mobile body and the locking of the door is permitted on the basis of the first locking request transmitted from the second terminal determined to be positioned outside the mobile body.

7. The control device according to any one of claims 1 to 3, wherein
the first terminal is a fob key, and
the second terminal is a mobile terminal that is used by the user.

8. A control system comprising:
a control device that is included in a mobile body; and
a first terminal that is a fob key carriable by a user, wherein
the control device includes a control unit that controls locking of a door included in the mobile body on a basis of a first locking request transmitted from any of the first terminal or a second terminal and a position of a terminal that transmits the first locking request, the second terminal being carriable by a user, and
the control unit performs control to permit the locking of the door based on the first locking request when the first terminal is determined to be positioned inside the mobile body and the first locking request is transmitted from the second terminal determined to be positioned outside the mobile body.

9. A control method that is executed by a computer, the control method comprising
controlling locking of a door included in a mobile body on a basis of a first locking request transmitted from any of a first terminal or a second terminal and a position of a terminal that transmits the first locking request, the first terminal and the second terminal being each carriable by a user, wherein
the controlling includes performing control to permit the locking of the door based on the first locking request when the first terminal is determined to be positioned inside the mobile body and the first locking request is transmitted from the second terminal determined to be positioned outside the mobile body.

10. A program for causing a computer to function as
a control unit configured to control locking of a door included in a mobile body on a basis of a first locking request transmitted from any of a first terminal or a second terminal and a position of a terminal that transmits the first locking request, the first terminal and the second terminal being each carriable by a user, wherein
the control unit performs control to permit the locking of the door based on the first locking request when the first terminal is determined to be positioned inside the mobile body and the first locking request is transmitted from the second terminal determined to be positioned outside the mobile body.
